# EUROPÄISCHE PATENTSCHRIFT

(11) **EP 1 013 076 B1**
(45) Veröffentlichungstag und Bekanntmachung des Hinweises auf die Patenterteilung: **28.02.2001**
(21) Anmeldenummer: 98951210.8
(22) Anmeldetag: 19.08.1998
(51) Int. Cl.: H04N 3/15

(54) **BILDSENSORELEMENTE**
IMAGE DETECTION MEMBERS
ELEMENTS DETECTEUR D'IMAGE

(30) Priorität: 12.09.1997 DE 19740612
(43) Veröffentlichungstag der Anmeldung: 28.06.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: BLOSS, Hans, D-90562 Heroldsberg (DE); MÖLLER, Heino, D-91056 Erlangen (DE)
(86) Internationale Anmeldenummer: DE9802490
(87) Internationale Veröffentlichungsnummer: WO9914938

(56) Entgegenhaltungen:
- WO-A-94/21998
- WO-A-96/31976
- WO-A-97/28558
- US-A- 4 242 700

## Beschreibung

Die vorliegende Erfindung betrifft eine verbesserte Anordnung von Bildsensorelementen mit den Merkmalen des Oberbegriffs von Anspruch 1, einen verbesserten Bildsensor sowie die Verwendung des Bildsensors.

Zur Aufnahme von Stand- oder Bewegtbildem in der Videotechnik haben sich in den letzten Jahren im wesentlichen zwei Techniken etabliert, die Photodiodenarrays und die CCD-Sensoren. Zur Zeit sind über 90% aller verwendeten Sensoren in CCD-Technik realisiert.

Das Photodiodenarray ist die ältere Technik, hat aber in seiner ursprünglichen Form einige technologisch bedingte Nachteile, die zu geringerer Empfindlichkeit, höherem Rauschen, niedrigerer Geschwindigkeit etc. führten, weshalb es von den CCD-Sensoren weitgehend verdrängt worden ist.

CCD-Sensoren haben hingegen den Nachteil, daß sie aufgrund der zusätzlichen Komplexität des Herstellungsverfahrens und der erhöhten Herstellungskosten nicht leicht mit CMOS-Schaltkreisen integriert werden können. Auch sind CCD-Sensoren Vorrichtungen mit einer hohen Kapazität, so daß eine on-chip CMOS-Ansteuerelektronik für Anordnungen mit großer Fläche eine sehr hohe Leistung verbrauchen würde (2 bis 3 W). Darüber hinaus sind für CCD-Sensoren viele verschiedene Spannungsniveaus notwendig, um eine hohe Effizienz der Ladungsübertragung sicherzustellen.

Dagegen haben die Fortschritte in der Siliziumtechnologie es ermöglicht, bei einem Photodiodenarray jedem Bildaufnahmeelement eine eigene aktive Verarbeitungseinheit (z.B. Verstärker etc.) hinzuzufügen und so die bestehenden Nachteile der Photodiodenarrays zu beseitigen und insbesondere sogar neue Möglichkeiten der Bildaufnahme zu schaffen. Diese Technik ist unter dem Begriff "APS" ("Active Pixel Sensor") bekannt. Die APS-Technik wird derzeit als für die Zukunft technologisch sehr bedeutsam angesehen.

Verbesserungen der bekannten Systeme sind gemacht worden, um die Bildschärfe und die Auflösung zu erhöhen, damit ein scharfes, gut aufgelöstes und kontrastreiches Bild bei einer vorgegebenen Anzahl von Bildelementen dargestellt werden kann. In diesem Zusammenhang ist beispielsweise festgestellt worden, daß eine hexagonale Anordnung sechseckiger Elemente, wie sie auch in der Retina von Mensch und Tier vorhanden ist; sehr vorteilhaft ist. Mit einer solchen Anordnung ist aber das Problem verbunden, daß eine numerische Bildverarbeitung deutlich erschwert ist, da die einzelnen Bildsensorelemente nicht in einer Anordnung von Spalten und Reihen angeordnet sind.

In Hinblick auf eine Optimierung der Anordnung von Bildsensorelementen haben die bekannten CCD-Sensoren jedoch den Nachteil, daß die CCD-Technik hinsichtlich der Formgebung und Anordnung der Bildpunkte wenig Freiheitsgrade bietet. In der Praxis sind nur rechteckige Formen von Bildsensorelementen, die zu einer regulären kartesischen Matrix zusammengefügt werden, von Bedeutung.

In der US-Patentschrift Nr. 3 971 065 wird ein Bildsensor beschrieben, bei dem drei verschiedene Typen von Bildsensorelementen, die jeweils aus CCD-Sensoren bestehen, dergestalt angeordnet sind, daß gleiche Typen von Bildsensorelementen jeweils in der Form von Gittern angeordnet sind. Genauer gesagt stellen die verschiedenen Typen von Bildsensorelementen jeweils eine erste Farbe, beispielsweise grün, eine zweite Farbe, beispielsweise rot, sowie die allgemeine Helligkeit dar. Die Bildsensorelemente für die allgemeine Helligkeit sind dabei in der Form eines Schachbrettmusters angeordnet, während die Bildsensorelemente für die erste Farbe die Zwischenräume in einer ersten Schachbrettmusterreihe, die Bildsensorelemente für die zweite Farbe die Zwischenräume in der zweiten Schachbrettmusterreihe und so weiter auffüllen. Dadurch sollen einerseits die hohe Komplexität der optischen Konstruktion und andererseits die mit den herkömmlichen Verfahren verbundenen Probleme der Bild-Lagegenauigkeit bei hintereinander angeordneten Filtern für verschiedene Farben vermieden werden.

Im Vergleich zu den CCD-Sensoren ist bei APS-CMOS-Sensoren dagegen prinzipiell fast jede beliebige Form mit beliebiger Gesamtanordnung realisierbar.

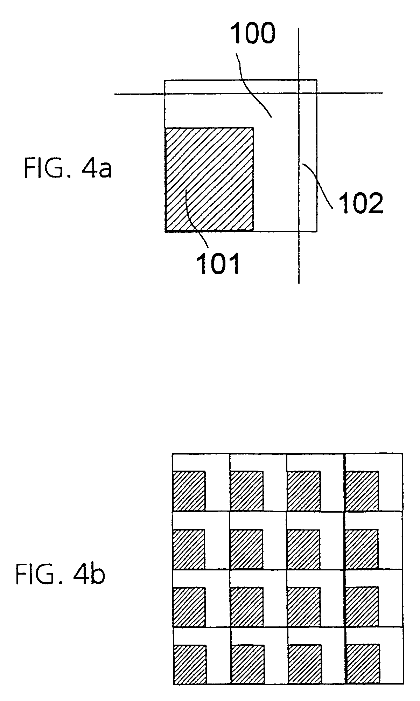

Bei einem bekannten AP-Sensor, wie er beispielsweise aus "CMOS Active Pixel Image Sensors for Highly Integrated Imaging Systems", Sunetra K. Mendis et al., IEEE Journal of Solid-State Circuits, Vol. 32, No. 2, February 1997, oder "Smar Image Sensors for Optical Microsystems", Peter Seitz et al., Laser und Optoelektronik **28**(6)/1996, bekannt ist, besteht ein einzelnes Sensorelement im wesentlichen aus drei Komponenten, die wie in Fig. 4a gezeigt angeordnet sind:
1. aus einer lichtempfindlichen Fläche 101 in Form einer Photodiode oder eines Phototransistors;
2. aus einem Schaltungsteil 100, der beispielsweise mehrere CMOS-Transistoren umfaßt und im allgemeinen für den Lichtnachweis nicht verwendbar ist, zum Erzeugen eines dem einfallenden Licht entsprechenden Signals und Verarbeiten des Signals;
3. aus einem Verdrahtungteil 102, der die einzelnen Sensorbildelemente zu einem Gesamtsensor verbindet.

Aus der WO 97/28558 ist ein Bildsensorelement bekannt, das einen lichtempfindlichen Teil, einen an den lichtempfindlichen Teil angrenzenden Ladungsübertragungsabschnitt sowie eine Ausleseschaltung, die angrenzend an den Ladungsübertragungsabschnitt angeordnet ist, umfaßt. Dabei belegt der lichtempfindliche Teil einen Abschnitt des Bildsensorelements im wesentlichen auf der ganzen Breite des Bildsensorelements.

Aus der WO 96/31976 ist überdies eine spezielle Anordnung von Bildsensorelementen bekannt, bei der allerdings im Gegensatz zur vorliegenden Erfindung die Verdrahtungsteile zum Verbinden der einzelnen Schaltungsteile miteinander und nach außen nicht einen Teil der Oberfläche der Bildsensorelemente belegen.

Die US-Patentschrift 4,558,365 beschreibt einen Bildsensor, bei dem eine Vielzahl von lichtempfindlichen Elementen achteckig ausgebildet sind und derartig versetzt angeordnet sind, damit eine möglichst große Fläche des Bildsensors mit lichtempfindlichen Bereichen belegt ist. Die Schwerpunkte der einzelnen lichtempfindlichen Elemente sind jedoch nicht auf einem quadratischen Gitter angeordnet.

Ebenso beschreibt die US-Patentschrift 4,200,892 einen Bildsensor, bei dem die lichtempfindlichen Elemente zwar zueinander versetzt aber auch nicht auf einem quadratischen Gitter angeordnet sind.

Die Anordnung der Komponenten der einzelnen Sensorelemente erfolgt bei den bekannten Sensoranordnungen nach schaltungs- und layouttechnischer Notwendigkeit und ist für eine spätere Weiterverarbeitung der Bildinformation nicht unbedingt optimal. Die Sensorelemente werden dann gemäß Fig. 4b zu einer Matrix oder zu anderen Strukturen angeordnet.

Bei der Optimierung der bekannten Bildsensorelemente und Bildsensoren findet sich der Fachmann im Spannungsfeld der folgenden gegenläufigen Tendenzen wieder.
1. Einerseits lassen sich Bildschärfe und Auflösung erhöhen, indem man die Anzahl der Bildsensoren erhöht und das Verhältnis lichtempfindliche Fläche zu Bildsensoroberfläche vergrößert.
2. Andererseits hängen Kosten und Schnelligkeit des sich ergebenden Bildsensors von der Anzahl der Sensorelemente ab. D.h. je mehr Sensorelemente, desto langsamer und teurer wird der sich ergebende Bildsensor.

Der vorliegenden Erfindung liegt somit die Aufgabe zugrunde, die bekannte Anordnung von Bildsensorelementen dahingehend zu verbessern, daß die Kosten des sich aus den Bildsensorelementen ergebenden Bildsensors verringert werden, seine Schnelligkeit erhöht wird und daß gleichzeitig die Bildschärfe und Auflösung des Bildsensors nicht beeinträchtigt werden.

Gemäß der vorliegenden Erfindung wird die Aufgabe durch die kennzeichnenden Merkmale von Patentanspruch 1 gelöst. Gemäß der vorliegenden Erfindung wird darüber hinaus auch noch ein Bildsensor nach Anspruch 8 sowie dessen Verwendung nach Anspruch 9 bereitgestellt.

Die vorliegende Erfindung beruht im wesentlichen auf der Erkenntnis, daß die Leistungsfähigkeit eines Bildsensors dadurch erhöht werden kann, daß die Schwerpunkte der lichtempfindlichen Flächen der einzelnen Bildsensorelemente in Form von zwei oder mehr zueinander versetzt angeordneten quadratischen Gittern angeordnet sind, wobei die Gitterlinien jeweils parallel zu den Zeilen bzw. Spalten des aufzunehmenden Bildes sind.

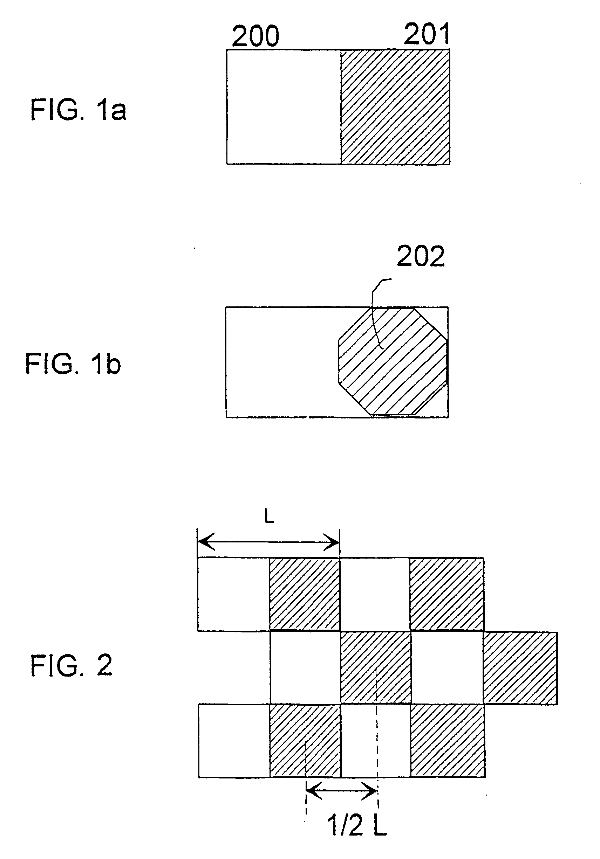

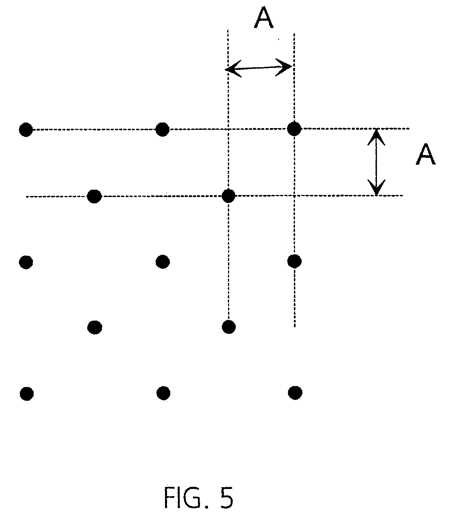

Dabei sind die Schwerpunkte der lichtempfindlichen Flächen der einzelnen Bildsensorelemente in einer Gitterlinie vorzugsweise derart angeordnet, daß sie auf die Hälfte des Abstands zwischen zwei Schwerpunkten von lichtempfindlichen Flächen der einzelnen Bildsensorelementen der vorangehenden Gitterlinie fallen, wie in Fig. 5 gezeigt. Gemäß einer besonders bevorzugten Ausführungsform wird eine Art Schachbrettmuster, wie in Fig. 2 gezeigt, realisiert. Die Bildinformation der zwischen den lichtempfindlichen Flächen liegenden Bereiche der jeweiligen Bildsensorelemente kann dann durch bekannte Interpolationsverfahren, wie sie beispielsweise aus dem Beitrag von Kris S. Balch "Replacing 16 mm Film Cameras with High Definition Digital Cameras" in "Ultrahigh- and High-Speed Photography, Videography, and Photonics "94", Proceedings of SPIE - The International Society for Optical Engineering, 27-28 July 1994, Vol. 2273, bekannt sind, gewonnen werden.

Somit wird die Tatsache, daß bei einem bekannten CMOS-Sensor in APS-Technik nur ein Teil der Sensorfläche für den Lichtnachweis zur Verfügung steht, gemäß der vorliegenden Erfindung gezielt ausgenutzt, indem lichtempfindliche und nicht-lichtempfindliche Teile so angeordnet werden, daß mit Hilfe von Interpolationsverfahren ein Bild rekonstruiert werden kann, das qualitativ hochwertiger als ein Bild mit gleicher Anzahl von Bildsensorelementen aber anderer Form und Anordnung der Bildsensorelemente ist. Gemäß der vorliegenden Erfindung können für die Interpolation bekannte Interpolationsverfahren verwendet werden.

Das Interpolationsverfahren kann direkt in die Hardware implementiert werden, so daß das Interpolationsverfahren nicht zeitkritisch ist, d.h. zu einer Verzögerung des Bildaufnahmeverfahrens führt. Darüber hinaus kann das Interpolationsverfahren zeitlich nach hinten verschoben werden, so daß es nicht während der Bildaufnahme sondern erst während der Bildverarbeitung abläuft.

Die Recheneinheit zur Interpolation der gewonnenen Daten kann auch in dem Schaltungsteil von jedem einzelnen Bildsensorelement enthalten sein.

Gemäß der vorliegenden Erfindung werden die folgenden Vorteile erzielt:
1. Die technologische Randbedingung, daß nicht die ganze Bildsensorelementoberfläche für die lichtempfindlichen Elemente bzw. Flächen zur Verfügung stehen (Füllfaktor << 100%, da die Schaltung in jedem Bildsensorelement Platz benötigt), wird gezielt ausgenutzt. Es werden Strukturen realisiert, welche die Anwendung einfacher, sehr wirkungsvoller Interpolationsverfahren ermöglichen. Die Effektivität dieser Interpolationsverfahren beruht darauf, daß nicht die vollständige Sensorfläche bzw. Bildsensorelementfläche mit lichtempfindlichen Elementen belegt ist, sondern lichtempfindliche und lichtunempfindliche Regionen entsprechend angeordnet sind.
2. Einfachste Umrechnung der gewonnenen Bildpunkte in ein Bildformat in Form einer regulären kartesischen Matrix zur Weiterverwendung in der Bildverarbeitung. Die "blinden Felder" der Schachbrettstruktur können leicht durch Interpolation gewonnen werden, und man erhält somit ein Bild mit quadratischen Bildpunkten.
3. Da für ein qualitativ gleichwertiges Bild durch die erfindungsgemäße Vorrichtung effektiv weniger Bildpunkte im Bildsensor erforderlich sind, können schnellere und kostengünstigere Kameras realisiert werden.

Die vorliegende Erfindung wird nun unter Bezugnahme auf die begleitenden Zeichnungen detaillierter beschrieben.

Fig. 1 zeigt eine beispielhafte Ausgestaltung eines Bildsensorelements.

Fig. 2 zeigt eine erfindungsgemäße Anordnung von Bildsensorelementen, wie sie beispielsweise in Fig. 1 gezeigt sind.

Fig. 3 zeigt einen erfindungsgemäßen Bildsensor mit der in Fig. 2 gezeigten Anordnung von Bildsensorelementen.

Fig. 4a zeigt ein herkömmliches Bildsensorelement, und Fig. 4b zeigt einen herkömmlichen Bildsensor.

Fig. 5 zeigt eine beispielhafte Anordnung der Schwerpunkte der lichtempfindlichen Flächen der einzelnen Bildsensorelemente gemäß einer bevorzugten Ausführungsform der vorliegenden Erfindung.

Fig. 6a zeigt ein weiteres Bildsensorelement, das gemäß Fig. 6b zu einer erfindungsgemäßen Anordnung angeordnet werden kann.

Fig. 6c zeigt eine erfindungsgemäße Anordnung der in Fig. 4a gezeigten Bildsensorelemente.

Ein wie in Fig. 1a gezeigtes Bildsensorelement ist rechteckig ausgebildet und weist eine vorbestimmte Länge und eine vorbestimmte Breite auf. Gemäß einer bevorzugten Ausgestaltung beträgt das Verhältnis zwischen Länge und Breite 2 zu 1, aber es sind auch andere geeignet ausgewählte Verhältnisse denkbar. Ein Teil (201) des Bildsensorelements ist dabei für das lichtempfindliche Element, beispielsweise eine Photodiode oder einen Phototransistor vorgesehen, während ein weiterer Teil (200) für den lichtunempfindlichen Schaltungsteil vorgesehen ist.

Wie in Fig. 1b gezeigt, wird die lichtempfindliche quadratische Fläche an den Ecken beschnitten, um Platz für die Verdrahtung zu schaffen. Dadurch entsteht eine achteckige Form der Photodiode bzw. des Phototransistors 202. Somit ist, wie in Fig. 1b gezeigt, das lichtempfindliche Element so angeordnet, daß die lichtempfindliche Fläche einen Abschnitt des Bildsensorelements im wesentlichen auf seiner ganzen Breite bedeckt. Dabei kann jedoch die lichtempfindliche Fläche jede beliebige Form aufweisen, beispielsweise eine sechseckige, viereckige oder Kreisform oder aber auch eine beliebige unregelmäßige Form. Sie bedeckt lediglich einen Abschnitt des Bildsensorelements im wesentlichen auf seiner ganzen Breite. Dabei heißt "im wesentlichen auf seiner ganzen Breite" vollständig bis auf kleinere Bereiche, die zum Bereitstellen von Verdrahtungsteilen ausgespart worden sind.

Gemäß der vorliegenden Erfindung werden die Bildsensorelemente so angeordnet, daß die Schwerpunkte der lichtempfindlichen Flächen der einzelnen Bildsensorelemente in Form von zwei oder mehr zueinander versetzt angeordneten quadratischen Gittern angeordnet sind, wobei die Gitterlinien jeweils parallel zu den Zeilen bzw. Spalten des aufzunehmenden Bildes sind. Das heißt, je nachdem, in welcher Orientierung man den Bildsensor betrachtet, stellen die einzelnen Gitterlinien entweder die Reihen oder die Spalten des aufzunehmenden Bildes dar.

Dabei sind die Schwerpunkte der lichtempfindlichen Flächen der einzelnen Bildsensorelemente in einer Gitterlinie vorzugsweise derart angeordnet, daß sie auf die Hälfte des Abstands zwischen zwei Schwerpunkten von lichtempfindlichen Flächen der einzelnen Bildsensorelementen der vorangehenden Gitterlinie fallen, wie in Fig. 5 gezeigt. Gemäß einer besonders bevorzugten Ausführungsform der vorliegenden Erfindung wird eine Art Schachbrettmuster, wie in Fig. 2 gezeigt, realisiert.

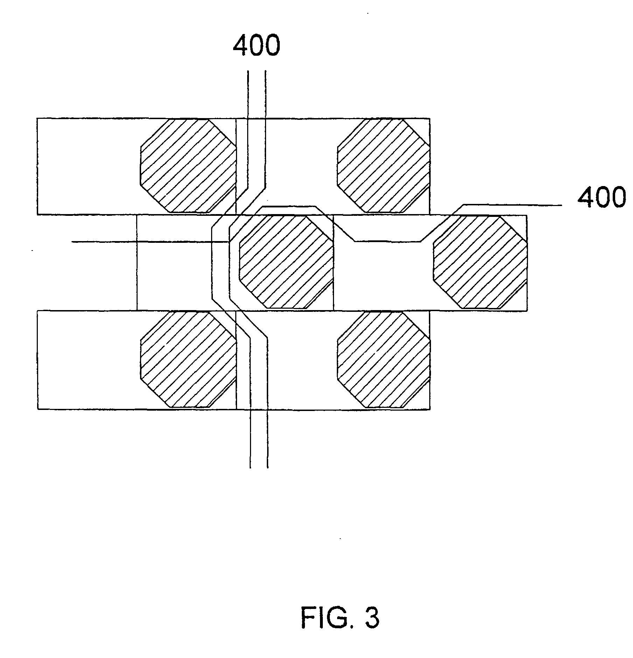

Die Verdrahtung der Bildsensorelemente erfolgt dabei gemäß Fig. 3. Die Größe der abgeschnittenen Ecken wird dabei gerade so groß ausgewählt, wie es für die Verdrahtung (400) erforderlich ist.

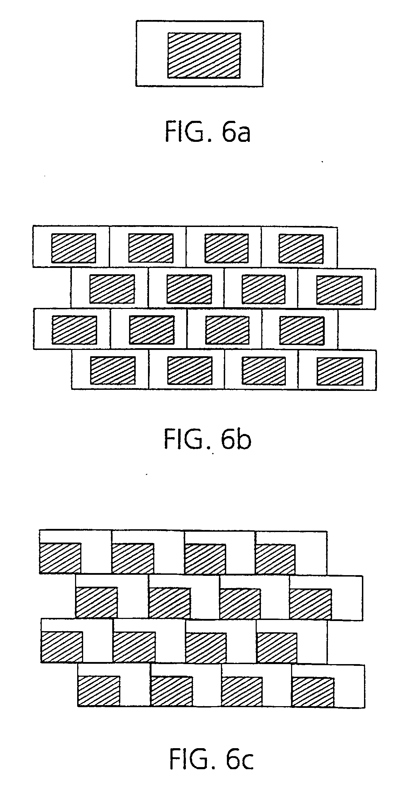

Obwohl für die erfindungsgemäße Anordnung von Bildsensorelemente die Ausgestaltung der einzelnen Bildsensorelemente wie in Fig. 1' gezeigt zweckmäßig ist, ist die vorliegende Erfindung keineswegs darauf beschränkt, daß nur derartige Bildsensorelemente für die erfindungsgemäße Anordnung verwendet werden können. Bei einer erfindungsgemäßen Anordnung gemäß können die einzelnen Bildsensorelemente auch wie in Fig. 6a oder auch Fig. 4a gezeigt aufgebaut sein. Die Fig. 6b und 6c zeigen Anordnungen von Bildsensorelementen, die jeweils wie in Fig. 4a oder 6a aufgebaut sind.

Bei Betrieb des Bildsensors wird in den lichtempfindlichen Flächen der einzelnen Bildsensorelementen durch das einfallende Licht ein Photostrom erzeugt, der räumlich über die Größe des Bildsensorelements und zeitlich über die Belichtungszeit in einer nicht gezeigten Verarbeitungseinrichtung aufintegriert wird, so daß sich ein der jeweiligen Graustufe ergebendes Bildsignal ergibt. Die Bildsignale der lichtunempfindlichen Teile der Bildsensorelemente werden in der nicht gezeigten Recheneinheit durch bekannte Interpolationsverfahren gewonnen. Durch diese Technik läßt sich bei einer festliegenden Anzahl von Bildsensorelementen die Auflösung erhöhen, d.h. wenn die lichtempfindliche Fläche jeweils die Hälfte des Bildsensorelements einnimmt, verdoppeln, beziehungsweise bei einer festgelegten Auflösung die Anzahl an Bildsensorelementen verringern, d.h. wenn die lichtempfindliche Fläche jeweils die Hälfte des Bildsensorelements einnimmt, halbieren, wodurch die Kosten verringert und die Schnelligkeit des Bildsensors erhöht wird.

Das erfindungsgemäße Bildsensorelement kann auch ein Längen-Breiten-Verhältnis von 3:1 oder mehr aufweisen, wobei die lichtempfindliche Fläche auf einem Drittel oder weniger des Bildsensorelements angeordnet ist. Ebenso ist denkbar, daß das erfindungsgemäße Bildsensorelement ein Längen-Breiten-Verhältnis von 4:1 aufweist, wobei die lichtempfindliche Fläche die Hälfte des Bildsensorelements ausfüllt und mittig auf dem Bildsensorelement angeordnet ist.

Der erfindungsgemäße Bildsensor kann aufgrund seiner erhöhten Schnelligkeit vorteilhafterweise in Hochgeschwindigkeitskameras, beispielsweise für Hochgeschwindigkeitsvideoaufnahmen, verwendet werden. Beispielsweise kann für eine Kamera mit 1000 Bildern/Sekunde ein Bildsensor mit 512² herkömmlichen Sensorelementen verwendet werden. Gemäß der vorliegenden Erfindung liefert ein Bildsensor mit 256 x 512 erfindungsgemäßen Sensorelementen 512² Bildpunkte bei vergleichbarer Bildqualität in einer Kamera mit 2000 Bildern/Sekunde.

## Patentansprüche

1. Anordnung von Bildsensorelementen zur zeilen- bzw. spaltenweisen Aufnahme von Bildern mit jeweils
- einer lichtempfindlichen Fläche (201, 202),
- einem Schaltungsteil (200), die ferner einen
- Verdrahtungsteil (400) zum Verbinden der einzelnen Schaltungsteile (200) miteinander und nach außen aufweist, wobei Schaltungsteil (200) und Verdrahtungsteil (400) einen Teil der Oberfläche der Bildsensorelemente belegen,
**dadurch gekennzeichnet, daß**
jeweils die Schwerpunkte der lichtempfindlichen Flächen (201, 202) der einzelnen Bildsensorelemente in Form von zwei oder mehr zueinander versetzt angeordneten quadratischen Gittern angeordnet sind, wobei die Gitterlinien jeweils parallel zu den Zeilen bzw. Spalten des aufzunehmenden Bildes sind.

2. Anordnung nach Anspruch 1, **dadurch gekennzeichnet, daß** die Schwerpunkte der lichtempfindlichen Flächen (201, 202) der einzelnen Bildsensorelemente in einer Gitterlinie auf die Hälfte des Abstands zwischen zwei Schwerpunkten von lichtempfindlichen Flächen der einzelnen Bildsensorelementen der vorangehenden Gitterlinie fallen.

3. Anordnung nach Anspruch 1 oder 2, wobei die Bildsensorelemente rechteckig ausgebildet sind, mit einer vorbestimmbaren Länge und einer vorbestimmbaren Breite, und die lichtempfindliche Fläche (201, 202) eines jeden Bildsensorelements einen Abschnitt des Bildsensorelements im wesentlichen auf der gesamten Breite des Bildsensorelements bedeckt.

4. Anordnung nach Anspruch 3, wobei das Längen-Breiten-Verhältnis 2:1 beträgt.

5. Anordnung nach Anspruch 3 oder 4, wobei die lichtempfindliche Fläche (202) in Form eines Achtecks ausgebildet ist.

6. Anordnung nach einem der Ansprüche 3 bis 5, wobei die lichtempfindliche Fläche (201, 202) auf einer Hälfte des Bildsensorelements angeordnet ist.

7. Anordnung nach einem der Ansprüche 3 bis 6, wobei die lichtempfindliche Fläche (201, 202) eine Photodiode, ein Phototransistor oder ein Photowiderstand ist.

8. Bildsensor mit einer Anordnung nach einem der Ansprüche 1 bis 7, Verdrahtungselementen zur Verbindung der Verdrahtungsteile der einzelnen Bildsensorelemente nach außen und einer mit den Verdrahtungselementen verbundenen Recheneinheit zur Interpolation der gewonnenen Daten.

9. Verwendung des Bildsensors nach Anspruch 8 in einer Hochgeschwindigkeitskamera.

## Claims

1. Arrangement of image sensor elements for recording images in lines or columns, said arrangement having respectively
- a photosensitive area (201, 202),
- a circuit part (200), which has in addition a
- wiring part (400) to connect the individual circuit parts (200) to one another and to the outside, circuit part (200) and wiring part (400) covering a portion of the surface of the image sensor elements,
**characterised in that**
respectively the centres of gravity of the photosensitive areas (201, 202) of the individual image sensor elements are arranged in the form of two or more square grids disposed offset to one another, the grid lines being respectively parallel to the lines or columns of the image to be recorded.

2. Arrangement according to claim 1, **characterised in that** the centres of gravity of the photosensitive areas (201, 202) of the individual image sensor elements fall in a grid line at half the distance between two centres of gravity of photosensitive areas of the individual image sensor elements of the preceding grid line.

3. Arrangement according to claim 1 or 2, wherein the image sensor elements are configured rectangular, with a length and width which can be predetermined, and the photosensitive area (201, 202) of each image sensor element covers a portion of the image sensor element substantially over the whole width of the image sensor element.

4. Arrangement according to claim 3, wherein the length-width ratio is 2:1.

5. Arrangement according to claim 3 or 4, wherein the photosensitive area (202) is configured in the shape of an octagon.

6. Arrangement according to one of claims 3 to 5, wherein the photosensitive area (201, 202) is arranged on one half of the image sensor element.

7. Arrangement according to one of claims 3 to 6, wherein the photosensitive area (201, 202) is a photodiode, a phototransistor or a photoresistor.

8. Image sensor with an arrangement according to one of claims 1 to 7, with wiring elements to connect the wiring parts of the individual image sensor elements to the outside, and with an arithmetic unit, connected to the wiring elements, for interpolation of the data obtained.

9. Use of the image sensor according to claim 8 in a high-speed camera.

## Revendications

1. Disposition d'éléments détecteurs d'image pour la saisie, ligne par ligne et colonne par colonne, d'images, chaque élément comportant
- une surface photosensible (201, 202),
- une partie de circuit (200) et
- une partie de câblage (400) pour relier les différentes parties de circuit (200) entre elles et avec l'extérieur, la partie de circuit (200) et la partie de câblage (400) occupant une partie de la surface des éléments détecteurs d'image,
caractérisée en ce que
le centre de gravité des surfaces photosensibles (201, 202) des différents éléments détecteurs d'image se trouve sur deux ou plusieurs réseaux carrés, décalés, les lignes des réseaux étant respectivement parallèles aux lignes ou colonnes de l'image à prendre.

2. Disposition selon la revendication 1,
caractérisée en ce que
le centre de gravité des surfaces photosensibles (201, 202) des différents éléments détecteurs d'image arrive sur une ligne du réseau à mi-distance entre deux centres de gravité de surfaces photosensibles des différents éléments détecteurs d'image de la ligne de réseau précédente.

3. Disposition selon la revendication 1 ou 2,
caractérisée en ce que
les éléments détecteurs d'image sont de forme rectangulaire avec une longueur et une largeur prédéterminée, et la surface photosensible (201, 202) de chaque élément détecteur d'image recouvre une partie de l'élément détecteur d'image, essentiellement sur toute la largeur de cet élément.

4. Disposition selon la revendication 3,
caractérisée en ce que
le rapport longueur/largeur est égal à 2/1.

5. Disposition selon la revendication 3 ou 4,
caractérisée en ce que
la surface photosensible (202) se présente sous la forme d'un octogone.

6. Disposition selon l'une quelconque des revendications 3 à 5,
caractérisée en ce que
la surface photosensible (201, 202) se trouve sur la moitié de l'élément détecteur d'image.

7. Disposition selon l'une quelconque des revendications 3 à 6,
caractérisée en ce que
la surface photosensible (201, 202) est une photodiode, un phototransistor ou une photorésistance.

8. Détecteur d'image ayant une disposition selon l'une des revendications 1 à 7,
caractérisé par
des éléments de câblage pour relier la partie de câblage des différents éléments détecteurs d'image avec l'extérieur, ainsi qu'une unité de calcul reliée aux éléments de câblage pour interpoler les données reçues.

9. Application du détecteur d'image selon la revendication 8 à une caméra ultra rapide.
